# EUROPEAN PATENT APPLICATION

(11) **EP 3 101 254 A1**
(43) Date of publication of application: **07.12.2016**
(21) Application number: 16168686.0
(22) Date of filing: 09.05.2016
(51) Int. Cl.: F02D 41/00, F02D 41/04, F02M 26/50

(54) **AN EXHAUST GAS RECIRCULATION SYSTEM**

(30) Priority: 01.06.2015 GB 201509379
(71) Applicant: Ford Global Technologies, LLC, Dearborn, MI 48126 (US)
(72) Inventor: Dixon, Jon, Maldon, Essex CM9 8DH (GB); Arevalo, Andres, London, Greater London N4 1JH (GB)
(74) Representative: Rogers, Ivan Mark

(57) **Abstract**

An exhaust gas recirculation system is disclosed in which an electronic controller 20 is used to operate an exhaust gas recirculation valve 6 so as to clean a moveable valve element 6V of the exhaust gas recirculation valve 6. Cleaning of the valve element 6V is delayed following a key-off of an engine 2 allowing any deposits 18 formed on the valve element 6V to cool to a lower temperature. The length of the delay is chosen such that any deposits 18 on the valve element 6V are still relatively soft and hence easy to remove but are unlikely to reform after the cleaning operation has taken place due to the lower temperature of the valve element 6V.

## Description

This invention relates to an exhaust gas recirculation system for an engine of a motor vehicle and in particular to an apparatus and method of reducing malfunctioning of an exhaust gas recirculation valve forming part of the system.

Significant levels of malfunctioning occur with some Exhaust Gas Recirculation valves (EGR valves), leading to warranty costs and customer dissatisfaction.

Such malfunctioning is normally caused by a valve of the EGR valve being unable to open from its closed position due to accumulated deposits of combustion products on the valve. This type of malfunctioning normally occurs when the engine is cold and is subsequently started. If a control system used to control opening and closing of the EGR valve tries to open the EGR valve after the engine has been started from cold and the valve is stuck then it will not open or will open slowly and in either case an error code indicating the malfunction of the EGR valve will be generated.

The deposits are generally exhaust products, primarily soot and hydrocarbon, which condense and coalesce on a stem of the valve during engine cooling and then harden as they cool. When the valve is hot, these deposits are soft and the valve can be opened and closed normally. However, by the time that the valve has been heated sufficiently after an engine start to soften the deposits, an EGR valve malfunction will already have occurred, been detected and been indicated.

In order to try and solve this problem it has previously been proposed in, for example, US patent publication 2009/0164106 to perform a cleaning cycle immediately after the engine is stopped. The cleaning cycle typically involves sweeping the valve over its full range of movement a number of times, typically three. Although this measure reduces sticking issues due to deposit formation, it is not completely effective and malfunctioning of the EGR valve will often still occur.

It is an object of the invention to provide an exhaust gas recirculation system and method to reduce the probability of EGR valve malfunctioning due to valve member sticking upon engine start-up from cold.

According to a first aspect of the invention there is provided an exhaust gas recirculation system for an engine of a motor vehicle comprising an exhaust gas recirculation passage connecting an exhaust gas outlet from the engine to an air inlet manifold of the engine, an exhaust gas recirculation valve comprising an electric actuator mounted on a valve body and a valve element moveable by the electric actuator to control the flow of exhaust gas through the exhaust gas recirculation passage and an electronic controller to control opening and closing movement of the valve element of the exhaust gas recirculation valve during normal running of the engine and to control the exhaust gas recirculation valve to perform at least one valve cleaning operation in which the valve element is moved between open and closed positions to remove deposits from the valve element when the engine is not running, characterised in that the electronic controller is further operable to delay execution of the at least one valve cleaning operation following a shutdown of the engine to allow cooling of the valve element to take place.

The electronic controller may be operable to enter a sleep mode during the delay between the shutdown of the engine and the start of the cleaning operation.

The electronic controller may have a timer to define the delay between the shutdown of the engine and the start of the cleaning operation.

The length of the delay may be based upon a comparison of an output from the timer with a predefined time limit.

The exhaust gas recirculation system may further comprise a temperature sensor arranged to provide a measurement of temperature to the electronic controller indicative of a temperature of the exhaust gas recirculation valve and the length of the delay between the shutdown of the engine and the start of the cleaning operation may be based upon a comparison of the measured temperature with a predefined temperature limit.

The electronic controller may include a model of predicted relationship between temperature and time for the exhaust gas recirculation valve and the length of the delay between the shutdown of the engine and the start of the cleaning operation may be based upon a comparison of the predicted temperature with a predefined temperature limit.

There may be two or more cleaning operations and the electronic controller may be operable to enter a sleep mode during a first delay between the shutdown of the engine and commencement of a first one of the cleaning operations and may be further operable to enter the sleep mode during respective delay periods between subsequent cleaning operations.

According to a second aspect of the invention there is provided a motor vehicle having an engine, at least one battery, a human machine interface to selectively start and shutdown the engine characterised in that the engine has an exhaust gas recirculation system constructed in accordance with said first aspect of the invention.

The cleaning of the exhaust gas recirculation valve may only be permitted if a state of charge of the battery is above a predefined state of charge limit.

According to a third aspect of the invention there is provided a method of cleaning an exhaust gas recirculation valve comprising an electric actuator mounted on a valve body and a valve element moveable by the electric actuator to clean the exhaust gas recirculation valve, characterised in that the method comprises delaying cleaning of the exhaust gas recirculation valve after shutdown of an engine to which the exhaust gas recirculation valve is connected to allow cooling of the valve element to take place thereby reducing the likelihood that deposits will reform on the valve element after the cleaning operation has been completed.

The method may further comprise putting an electronic controller used to control operation of the exhaust gas recirculation valve into a sleep mode during the delay between the shutdown of the engine and the start of the cleaning operation in order to reduce the consumption of electricity by the electronic controller.

The method may further comprise using a comparison of an output from a timer with a predefined time limit to determine the length of the delay.

The length of the delay may be based upon a comparison of a measured temperature of the exhaust gas recirculation valve with a predefined temperature limit.

The length of the delay may be based upon a comparison of a predicted temperature of the exhaust gas recirculation valve with a predefined temperature limit.

The method may comprise using two or more cleaning operations to clean the exhaust gas recirculation valve and an electronic controller used to control the exhaust gas recirculation valve may be put in a sleep mode during the delay between the shutdown of the engine and the start of a first one of the cleaning operations and the electronic controller may further be put into the sleep mode during respective delay periods between subsequent cleaning operations.

The invention will now be described by way of example with reference to the accompanying drawing of which:-
Fig.1 is a schematic diagram of a motor vehicle according to a second aspect of the invention having an exhaust gas recirculation system according to a first aspect of the invention;
Fig.2a is a diagrammatic representation of an exhaust gas recirculation valve for use in the exhaust gas recirculation system shown in Fig.1 showing a valve of the exhaust gas recirculation valve in a closed position;
Fig.2b is a diagrammatic representation similar to that of Fig.2a but showing the valve in a partially open position;
Fig.3a is a high level flow chart of a first embodiment of a method of cleaning an exhaust gas recirculation valve having a moveable valve so as to reduce exhaust gas recirculation valve malfunctioning in accordance with a third aspect of the invention;
Fig.3b is a first routine for use in the method of Fig.3a for delaying the starting of a valve member cleaning operation;
Fig.3c is an alternative routine for use in the method of Fig.3a for delaying the starting of the valve member cleaning operation;
Fig.4 is a high level flow chart of a second embodiment of a method of cleaning an exhaust gas recirculation valve having a moveable valve so as to reduce exhaust gas recirculation valve malfunctioning in accordance with the third aspect of the invention;
Fig.5 is a high level flow chart of a third embodiment of a method of cleaning an exhaust gas recirculation valve having a moveable valve so as to reduce exhaust gas recirculation valve malfunctioning in accordance with the third aspect of the invention; and
Fig.6 is a high level flow chart of a fourth embodiment of a method of cleaning an exhaust gas recirculation valve having a moveable valve so as to reduce exhaust gas recirculation valve malfunctioning in accordance with the third aspect of the invention.

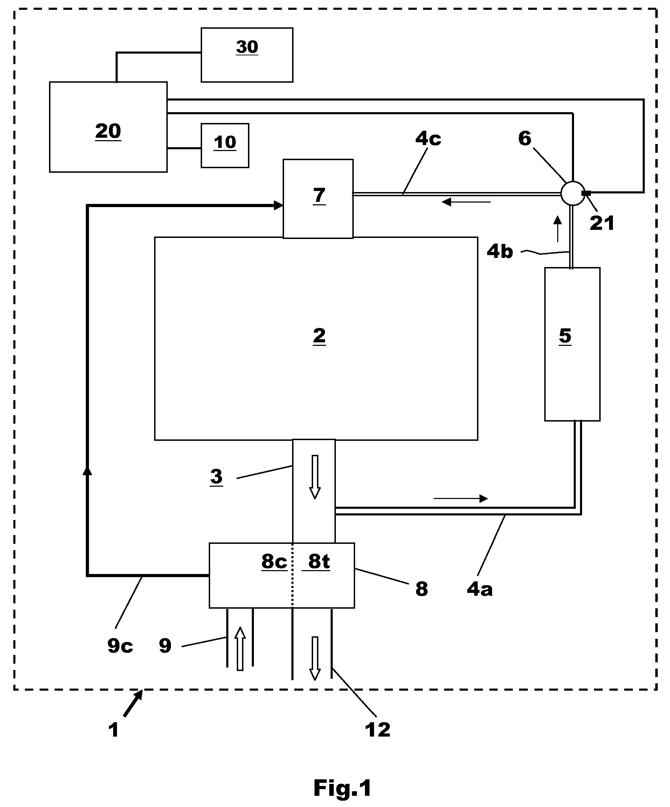

With particular reference to Figs.1 to 2b there is shown a motor vehicle 1 having an engine in the form of a diesel engine 2 arranged to supply exhaust gas via an exhaust gas outlet passage 3 to a turbocharger 8. The turbocharger 8 has a turbine 8t driven by the exhaust gas from the engine 2 and a compressor 8c driven by the turbine 8t. Exhaust gas having past through the turbine 8t exits the motor vehicle 1 via an exhaust system 12 that normally includes one or more exhaust aftertreatment devices (not shown).

Ambient air enters an air supply system for the engine 2 via an air inlet 9, is compressed by the compressor 8c and is supplied to an air inlet component such as an air inlet manifold 7 via a conduit 9c.

Exhaust gas is recirculated from the engine outlet passage 3 to the air inlet manifold 7 via an exhaust gas recirculation system. The exhaust recirculation system comprises an exhaust gas cooler 5, an exhaust gas recirculation valve 6 an exhaust gas recirculation flow passage and an electronic controller 20. The inlet manifold 7 may include a throttle valve (not shown) or a separate throttle body may be provided.

The exhaust gas recirculation flow passage comprises a first conduit 4a arranged to extract exhaust gas from, in the case of this example, the engine outlet passage 3 at a position upstream of the turbine 8t and supply it to the exhaust gas cooler 5, a second conduit 4b arranged to transfer cooled exhaust gas from the exhaust gas cooler 5 to an inlet of the exhaust gas recirculation valve 6 and a third conduit 4c arranged to transfer exhaust gas from an outlet of the exhaust gas recirculation valve 6 to the inlet manifold 7.

A human machine interface (HMI) in the form of an ignition switch 10 is provide to enable the engine 2 to be started and shutdown by a user of the motor vehicle 1.

It will be appreciated that various arrangements can be used to switch on and off the engine and that the invention is not limited to the use of an ignition switch. When the HMI 10 is operated so as to start the engine 2 and place it into a running state this is known as a 'key-on' event and when the HMI 10 is operated so as to shutdown the engine 2 and place it into a non-running or stopped state this is known as a 'key-off' event.

When a key-on event occurs, the electronic controller 20 is activated or placed into an active state and, when a key-off event occurs, the electronic controller 20 is placed into a sleep or snooze state in order to reduce the consumption of electricity from a battery 30 while the engine 2 is not running. In the sleep state most of the functionality of the electronic controller 20 is switched off with only the essential functionality required during the sleep state being left active.

The exhaust gas recirculation valve 6 comprises an electric actuator such as a solenoid 13 mounted on a water cooled valve body 14 and a valve element or valve 6V moveable by the solenoid 13.

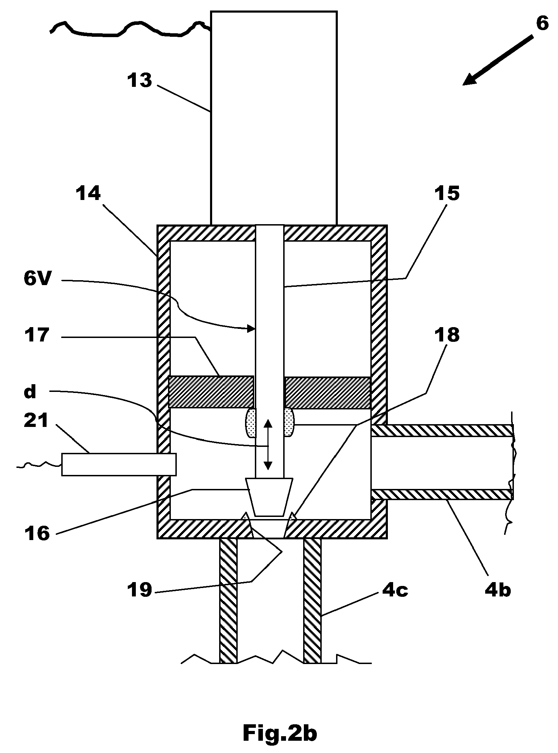

The valve body 14 defines a valve chamber having an inlet connected to the second conduit 4b and an outlet connected to the third conduit 4c. The flow of exhaust gas through the valve body 14 is controlled by the valve element 6V. The valve element 6V comprises of a valve stem 15 and a valve member 16 mounted at one end of the valve stem 15. The valve member 16 is engageable with an outlet port 19 (see Fig.2b) to control the flow of exhaust gas through the exhaust gas recirculation valve 6 in response to a control signal provide to the solenoid 13 from the electronic controller 20. It will be appreciated that the solenoid 13 could be driven via a power supply that is controlled by the electronic controller 20 and so the electronic controller 20 need not necessarily directly provide the required electrical power for the solenoid 13.

The valve stem 15 is engaged with the solenoid 13 and is moved axially in response to the application of a magnetic flux provided by the solenoid 13 against the action of a spring (not shown) as is well known in the art. Examples of such exhaust gas recirculation valves are well known in the art and the invention is not limited to the exhaust gas recirculation valve shown and described herein. For example and without limitation, US Patent 4,130,094 and Korean Patent Publication 201401469 both disclose similar types of exhaust gas recirculation valve that could be cleaned using the inventive methods proposed herein.

When the valve member 16 is moved away from the outlet port 19 exhaust gas can flow through the exhaust gas recirculation valve 6 from the second conduit 4b to the third conduit 4c and when the valve member 16 is fully engaged with the outlet port 19 due to the action of the spring no exhaust gas can flow through the exhaust gas recirculation valve 6 from the second conduit 4b to the third conduit 4c. The displacement of the valve member 16 relative to the outlet port 19 is therefore used to control the amount of exhaust gas recirculation flow from the outlet passage 3 to the inlet manifold 7.

A guide 17 is provide in this case for the valve stem 15 to support axial movement of the valve stem 15 but also to act as a scraper as will be described in more detail hereinafter.

A temperature sensor 21 is shown in Figs.1 to 2b for sensing the temperature of the exhaust gas recirculation valve 6 and, in particular, the temperature in the region of the valve member 16 and valve stem 15. It will be appreciated that the invention is not limited to the use of a temperature sensor and that for some embodiments no temperature sensor is required. It will also be appreciated that alternative measurements of temperature could be used such as, for example and without limitation, ambient temperature sensing, sensing of the temperature of the valve body 14 or direct sensing of the temperature of the valve stem 15 and that temperature modelling could be used to predict the temperature of a component.

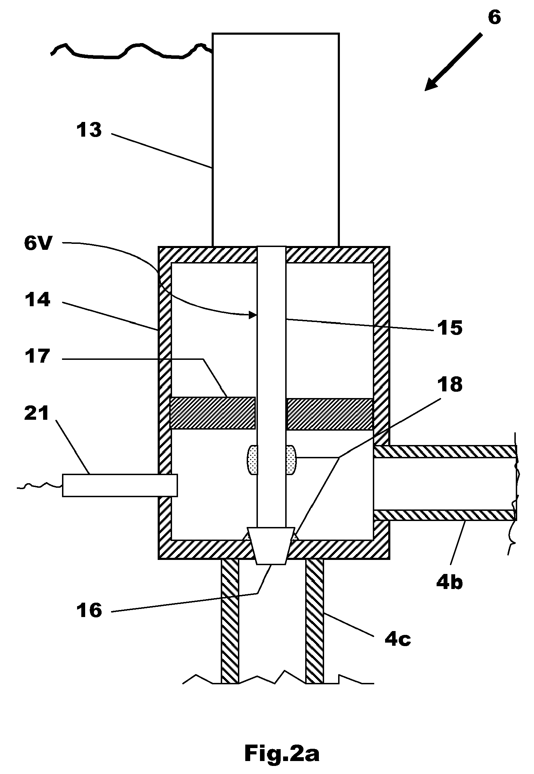

In Fig.2a the valve member 16 is shown in a fully closed position and deposits of combustion 18 are shown on the valve stem 15 and bridging between the valve member 16 and the valve body 14. Such deposits will often result in malfunction of the exhaust gas recirculation valve 6 if not removed because they act so as to stick the valve member 16 in the fully closed position or prevent free movement of the valve stem 15 if they remain in place when the exhaust gas recirculation valve 6 cools. It will be appreciated that if any deposits on the valve member 16 are removed by cleaning the valve element 6V then any deposits bridging between the valve member 16 of the valve element 6V and the valve body 14 will also be removed.

In Fig.2b the valve stem 15 and the valve member 16 are at a temperature where any deposits 18 are still soft enough to be easily removed. The valve member 16 has been moved as part of a delayed cleaning operation or cycle into a partially open position thereby breaking the bond between the valve member 16 and the valve body 14 and causing the combustion deposits 18 on the valve stem 15 to come into contact with the guide 17. The guide 17 acts in this case as a scraper to remove the deposits 18 that have built up on the valve stem 15 that would otherwise restrict motion of the valve stem 15 during normal use thereby resulting in a malfunction of the exhaust gas recirculation valve 6.

Operation of the exhaust gas recirculation system during normal use is conventional in operation and is not described in detail other than to say that the amount of exhaust gas recirculation flow is varied using the exhaust gas recirculation valve 6 in response to a control signal from the electronic controller 20.

When a key-off event occurs, the electronic controller 20 is placed into a sleep mode so as to reduce the consumption of electricity by the electronic controller 20.

Then after a period of time has elapsed the electronic controller 20 is woken and an exhaust gas valve cleaning cycle is executed by the electronic controller 20.

The cleaning cycle comprises of at least one and normally two or three operations of the exhaust gas recirculation valve 6. That is to say, the solenoid 13 is operated by the electronic controller 20 to open and close the exhaust gas recirculation valve 6 several times in order to remove combustion deposits from the valve stem 15 and the valve member 16 by causing the valve element 6V to reciprocate axially as indicated by a double headed arrow 'd' on Fig.2b. In some cases cleaning comprises moving the valve element 6V between fully open and fully closed positions and in other cases the valve element 6V is moved between closed and partially open positions.

The period of time chosen to delay cleaning from a key-off event is such that any deposits are still soft enough to be removed easily but cooling of the exhaust gas recirculation valve 6 is such that the likelihood of deposits reforming on the valve stem 15 or re-bonding the valve member 16 to the valve body 14 is considerably reduced. In one example it was found that a delay of 30 minutes produced the required result.

It will be appreciated that as the deposits cool they tend to harden and are then more difficult to remove and that at ambient temperature a large force is often required to be applied by the solenoid 13 to remove the deposits. This is particularly the case if the effect of these deposits is to bond the valve member 16 to the valve body 14. The application of such a large force will place a strain on the electrical components due to the high current required and, in severe cases of deposit accumulation, the force required could be greater than that available from the solenoid 13.

The period of time can be a predefined time delay from the time that the key-off event occurs. In such a case a timer (not shown) is started when the key-off event occurs and, when the timer elapses, the electronic controller 20 is woken and the cleaning cycle takes place. It will be appreciated that the timer could count up or count down to zero.

Alternatively, the period of time could be based upon the temperature of a key component of the exhaust gas recirculation valve 6 or any other temperature that provides and indication of the predicted state of the deposits. That is to say, will provide an indication when the deposits will be easy to remove and are not likely to reform. In such a case a temperature sensor such as the temperature sensor 21 could be used to provide a measurement of temperature and the measured temperature is compared with a predefined limit. When the temperature is sensed by the temperature sensor 21 to be at or below the predefined limit, the electronic controller 20 is woken and the cleaning cycle takes place. Alternatively, the temperature of a key component could be modelled and the modelled temperature be used for comparison with a predefined limit.

In either case the temperature limit is set between a normal operating temperature of the relevant component and ambient temperature. In one example a temperature limit of 50°C was found to produce satisfactory results.

Irrespective of whether time or temperature is used to control the delay in cleaning, after the cleaning cycle has taken place, the electronic controller 20 is placed back into a sleep mode to reduce the consumption of electricity by the electronic controller 20.

It some embodiments more than one cleaning cycle is conducted and in such an embodiment there is a period of time allowed to elapse between each cleaning cycle in which the electronic controller 20 is placed into the sleep mode.

In further embodiments cleaning of the exhaust gas recirculation valve 6 may be restricted or prevented if the state of charge of the battery 30 is below a predefined level.

Therefore, in summary, by delaying cleaning of the exhaust gas recirculation valve until a period of time has elapsed but where the deposits are still soft enough to be easily removed, deposits are less likely to reform after cleaning of the valve and the risk of malfunctioning of the exhaust gas recirculation valve is considerably reduced compared to a cleaning method where the cleaning occurs immediately after the engine is switched off when the deposits are still hot and likely to reform on the valve stem and valve member after cleaning.

It will however be appreciated that cleaning of the exhaust gas recirculation valve immediately upon receipt of a key-off event could be used in combination with the delayed cleaning method proposed by this invention.

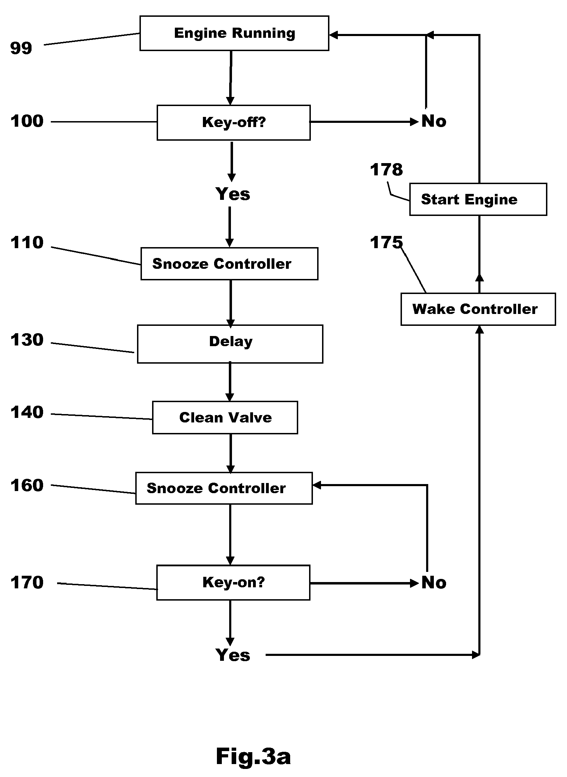

With reference to Figs.3a to 3c there is shown a first embodiment of a method of cleaning an exhaust gas recirculation valve such as the exhaust gas recirculation valve 6. Initially the engine of the motor vehicle is running, as indicated in box 99, and the method proper commences in box 100 where it is checked to see whether a key-off event has occurred.

If a key-off event has not occurred the method will cycle around boxes 100 and 99 with the engine running. However, if when checked in box 100, a key-off event has occurred, the method advances to box 110 where an electronic controller used to control operation of the exhaust gas recirculation valve is snoozed so as to put it into a sleep mode or state. The method then advances from box 110 to box 130 where a period of time is allowed to pass referred to on Fig.3a as a 'Delay'.

The function of the 'Delay' is to allow the exhaust gas valve and, in particular, a moveable valve of the exhaust gas recirculation valve to cool from its normal working temperature to a temperature where any deposits on the valve are still sufficiently soft to allow them to be easily removed but sufficiently cool that deposits are unlikely to reform on the valve after cleaning has taken place. The length of time required for this delay will depend upon the design, size and location of the EGR valve which will affect the rate at which the EGR valve will cool but, as previously referred to, a delay of several tens of minutes is usually required to allow the EGR valve to cool.

When the period of time has elapsed, the method advances to box 140 where a cleaning operation or cycle is performed on the valve to remove any deposits that have built up on the valve. It will be appreciated that during use hot exhaust gas including products of combustion will flow through the exhaust gas recirculation valve and that some of these products of combustion will adhere to the valve.

A cleaning cycle will normally comprise of at least one opening and closing of the valve of the exhaust gas recirculation valve so as to break any bonds between a valve member of the valve and a valve body and scrape off any deposits on a valve stem of the valve. In the case of one embodiment three open and close valve cycles are used for each cleaning operation.

After cleaning of the exhaust gas recirculation valve is complete the method advances from box 140 to 160 where the electronic controller is once again snoozed so as to place it in a sleep mode.

The method then advance from box 160 to box 170 to check whether a key-on event has occurred and, if a key-on event has not occurred, the method returns to box 160 so as to keep the electronic controller in its sleep mode. However, if a key-on event has occurred, the method advances to box 175 where the electronic controller is woken from the sleep mode and then to box 99 where the engine is once again running after being started in box 178.

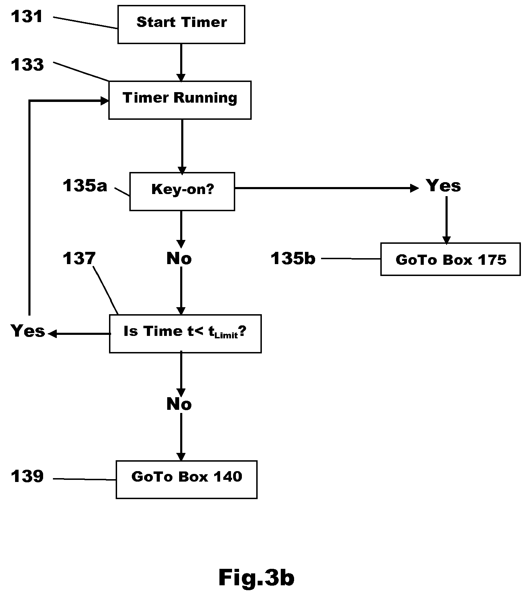

Fig.3b shows one approach to providing the 'Delay' referred to in box 130 in which a timer is used to provide the 'Delay'.

In box 131 the timer is started when a key-off event occurs so that, in box 133 the timer is running and, in this case, is counting up. In box 135a it is checked whether a key-on event has occurred and, if it has, the 'Delay' is cancelled and the method reverts to box 175 in the main method shown in Fig.3a as indicated in box 135b.

However, if when checked in box 135a, a key-on event has not occurred, the method advances to box 137 where it is checked whether the current elapsed time (t) indicated by the timer is greater than or equal to a time limit (t_{Limit}).

If the current elapsed time (t) is not greater than or equal to the time limit (t_{Limit}) when checked in box 137, the method returns to box 133 and the timer continues running. However if the current elapsed time (t) when checked in box 137 is greater than the time limit (t_{Limit}) the method reverts back to box 140 of the main method via box 139.

It will be appreciated that the time limit (t_{Limit}) is set to allow the exhaust gas recirculation valve to cool sufficiently to perform the cleaning operation while any deposits are still soft enough to allow them to be easily removed but is sufficiently cool that deposits are unlikely to reform on the valve.

The time limit (t_{Limit}) in some embodiments is a fixed period of time and in other embodiments is adjusted to take into account other factors that affect cooling of the exhaust gas recirculation valve. For example and without limitation, if the ambient temperature is very low the cooling of the exhaust gas recirculation valve is likely to be faster than if the ambient temperature is high and so a relationship between ambient temperature and required cooling time could be used to adjust the required time limit (t_{Limit}). • The relationship between ambient temperature and t_{Limit} could be provided by way of an algorithm or a look up chart or in any other suitable manner.

It will be appreciated that the timer could count down and the logic in box 137 be changed so that when the timer reaches zero the method would return to box 140 from box 137.

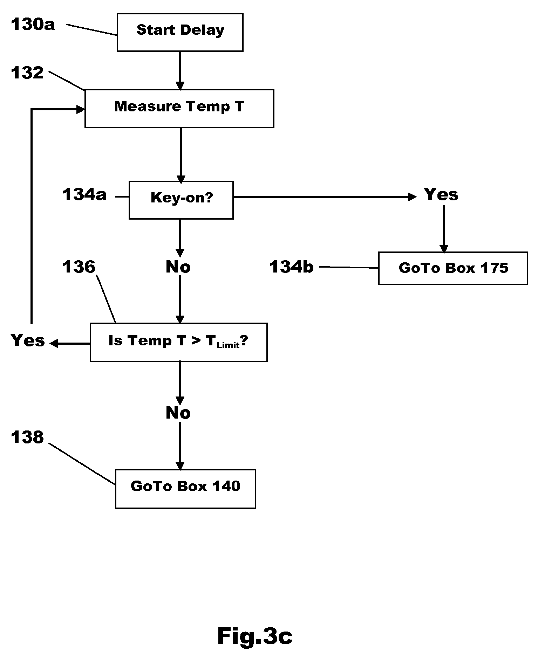

Fig.3c shows a second approach to providing the 'Delay' referred to in box 130 in which temperature is used to provide the 'Delay'.

In box 130a the 'Delay' is started when a key-off event has occurred causing the electronic controller to be placed into a sleep mode. In the case of this example, the temperature of the exhaust gas recirculation valve is continuously monitored by a temperature sensor 21 located near to the valve element 6V of the exhaust gas recirculation valve.

In box 134a it is checked whether a key-on event has occurred and, if it has, the 'Delay' is cancelled and the method returns to box 175 in the main method shown in Fig.3a, as indicated in box 134b.

However, if a key-on event has not occurred, the method advances to box 136 where it is checked whether the currently measured temperature (Temp T) is greater than a predefined temperature limit (T_{Limit}). If the current temperature (Temp T) is greater than the temperature limit (T_{Limit}) then the method returns to box 132 and the temperature of the exhaust gas recirculation valve continues to be measured. However, if when checked in box 136, the current temperature (Temp T) is no longer greater than the temperature limit (T_{Limit}), the method returns via box 138 to box 140 in the main method and cleaning of the exhaust gas recirculation valve is performed.

In the case of this example the temperature limit T_{Limit} is set such that above the temperature limit T_{Limit} the exhaust gas recirculation valve will have cooled insufficiently to significantly reduce the risk of deposits reforming after cleaning of the exhaust gas recirculation valve. The temperature limit T_{Limit} is however sufficiently high that any deposits can be easily removed and have not hardened to make their removal difficult or require excessive force from the electrical actuator of the exhaust gas recirculation valve. In one example a temperature limit T_{Limit} of approximately 50°C was found to produce an acceptable result.

Therefore in accordance with this first embodiment a single delayed cleaning cycle is performed when the exhaust gas recirculation valve has cooled sufficiently that the risk of deposits reforming after the cleaning cycle has been performed is considerably reduced but before any deposits have hardened and become difficult to remove.

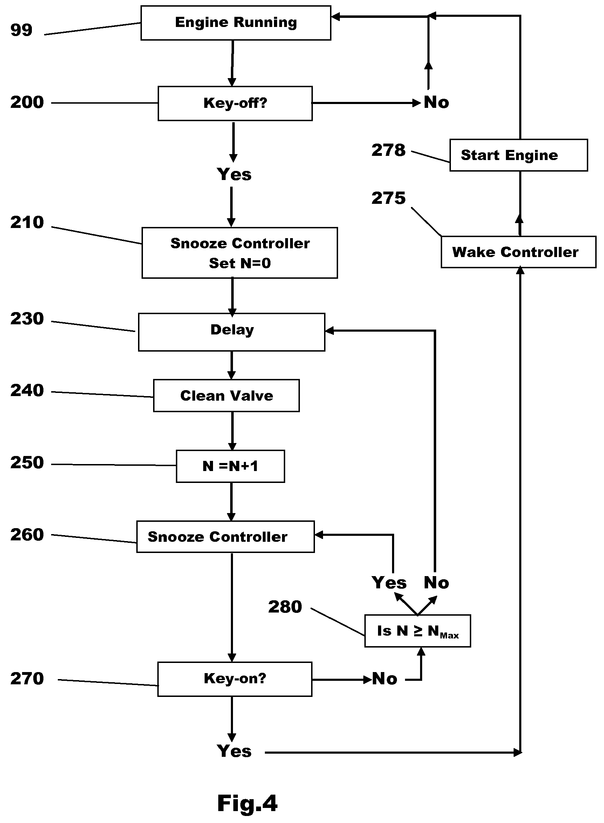

With reference to Fig.4 there is shown a second embodiment of a method of cleaning an exhaust gas recirculation valve that is in many respects similar to that previously described with reference to Figs.3a to 3c.

As before, in box 99 the engine is running and in box 200 it is determined whether a key-off event has occurred. If a key-off event has occurred an electronic controller used to control the operation of an exhaust gas recirculation valve is placed into a sleep mode in box 210 and otherwise the engine remains running. However, in the case of this second embodiment more than one delayed cleaning cycle is conducted and so a counter is set to zero. In this case the counter is set to zero in box 210 but a separate box could be used to set the counter.

The method then advances through boxes 230 and 240 in which processes as previously discussed with respect to boxes 13 and 140 are carried out. The method for determining the 'Delay' referred to in box 230 could be the same as that referred to in box 130 and previously described in detail with respect to Figs.3b and 3c.

After the first cleaning cycle has been completed the method advances from box 240 to box 250 where the value of the counter is incremented by one (N = N+1).

The method then advances to box 260 where the electronic controller is placed into a sleep mode and on to box 270 where it is checked whether a key-on event has occurred.

As before, if a key-on event has occurred, the method returns to box 99 via boxes 275 and 278 in which the electronic controller is woken so as to be in a fully active state and the engine is started.

If, when checked in box 270, a key-on event has not occurred, the method advances to box 280 to check the value of the counter (N) against a predefined value (Nₘₐₓ).

If the value of the counter is greater than or equal to the predefined value N_{Max} then the method returns to box 260 and no further cleaning cycles will be performed. However, if the value of the counter is less than the predefined value N_{Max}, the method returns to box 230 where a further 'Delay' is started before a further cleaning cycle is conducted in box 250. For example, if two cleaning cycles are to be performed then N_{Max} is set to 2 so that after the required two cleaning cycles have been carried out no further cleaning will occur and the method will continue to cycle around the boxes 260, 270 and 280 until a Key-on event occurs.

It will be appreciated that in this case the 'Delay' set for the first cleaning cycle could be set to a different value to that used for the second cleaning cycle. That is to say, the 'Delay' used the first time the box 230 is executed could be different to the 'Delay' used the second or subsequent time the box 230 is executed. As before the 'Delay' could be a time delay based upon a counting of elapsed time or be based upon a measurement or estimate of the temperature of the exhaust gas recirculation valve.

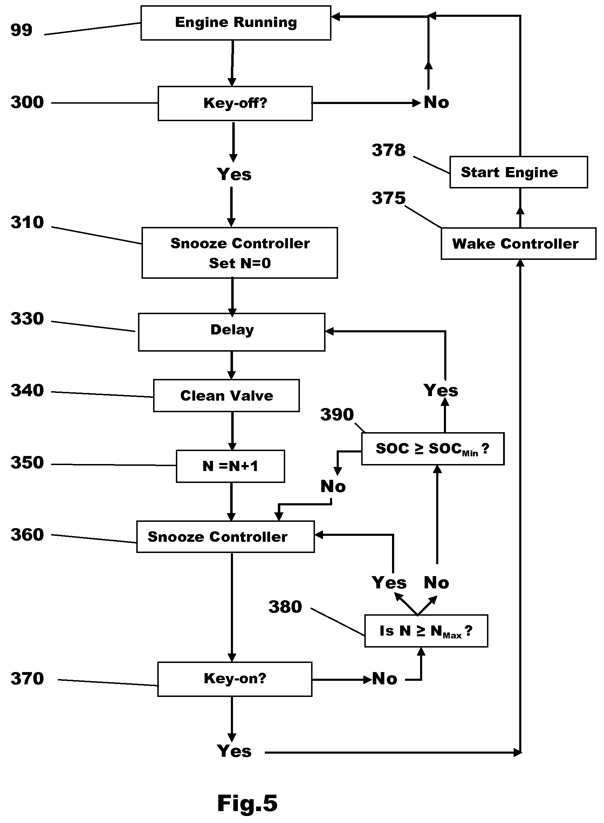

With reference to Fig.5 there is shown a third embodiment of a method of cleaning an exhaust gas recirculation valve that is in many respects similar to that previously described with reference to Fig.4 and the boxes 99, 300, 310, 330, 330, 340, 350, 360, 370, 375 and 378 have the same functionality as the boxes 99, 200, 210, 230, 230, 240, 250, 260, 260, 270, 275 and 278 shown and described with respect to Fig.4.

The main difference between this embodiment and that previously described is that the state of charge of a battery is taken into account when deciding whether to conduct a cleaning cycle. It will be appreciated that, if required, this state of charge factor could also be used in the case of the first embodiment shown in Fig.3a.

As shown in Fig.5 from box 380 if a further cleaning cycle is required the method advances to box 390 to check whether the state of charge (SOC) of a battery such as the battery 30 is above a predefined limit (SOC_{Min}). If the current state of charge (SOC) is higher than the state of charge limit (SOC_{Min}), the method returns to box 330 and a further 'Delay' and cleaning cycle commences and, if the current state of charge (SOC) is not higher than the state of charge limit (SOC_{Min}), the method returns to box 360 and the electronic controller is placed into the sleep mode.

This checking of battery state of charge is particularly relevant if more than one cleaning cycle is to be performed because it is important that sufficient charge remains in the battery to restart the engine and operate the main electrical and electronic systems of the motor vehicle when the engine is restarted.

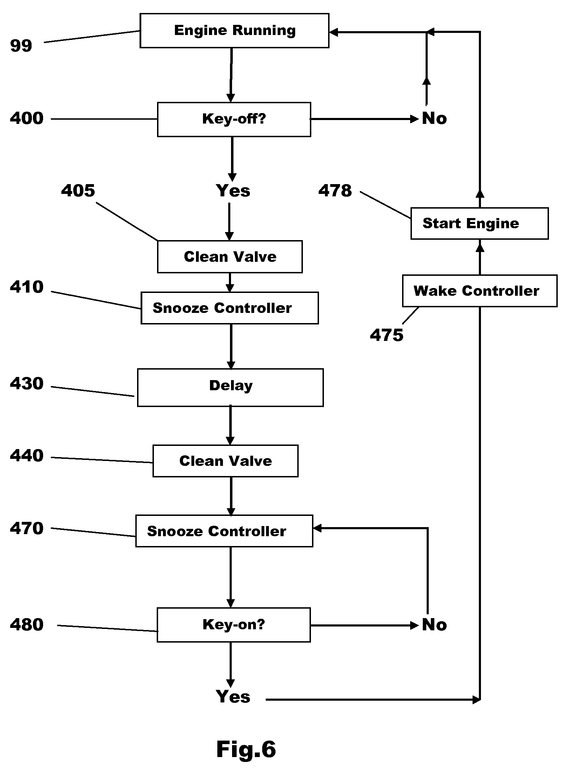

With reference to Fig.6 there is a shown a further embodiment of a method that is in most respects the same as that previously described with reference to Figs.3a to 3c and for which steps having the same functionality as those appearing in Fig.3a have the same reference numeral with the addition of 300. The only significant difference between this further embodiment and that shown in Figs. 3a to 3c is that a further method step indicated as box 405 on Fig.6 is present between the boxes 400 and 410 on Fig.6.

When the engine is shutdown due to the occurrence of a key-off event, a cleaning of the valve is carried out immediately while the exhaust gas recirculation valve is still at substantially its normal working temperature. This cleaning step will removes most of the accumulated deposits and the further delayed cleaning step shown in box 440 then carries out further cleaning at a time when the exhaust gas recirculation valve has cooled sufficiently for cleaning still to be easily carried out but when the reformation of deposits on the valve of the exhaust gas recirculation valve are unlikely to occur after cleaning has been completed.

Although the invention has been described with reference to a pintle type exhaust gas recirculation valve it will be appreciated that it could be applied to other types of exhaust gas recirculation valve with advantage.

Although the invention has been described by way of example to a turbocharged diesel engine for which its use is particularly advantageous it will be appreciated that it could be applied with benefit to other types of engine where malfunctioning of the exhaust gas recirculation valve due to accumulated deposits is a problem.

It will be appreciated by those skilled in the art that, although the invention has been described by way of example with reference to several embodiments, it is not limited to the disclosed embodiments and that one or more alternative embodiments could be constructed without departing from the scope of the invention as defined by the appended claims.

## Claims

1. An exhaust gas recirculation system for an engine (2) of a motor vehicle (1) comprising an exhaust gas recirculation passage (4a, 4b, 4c) connecting an exhaust gas outlet (3) from the engine (2) to an air inlet manifold (7) of the engine (2), an exhaust gas recirculation valve (6) comprising an electric actuator (13) mounted on a valve body (14) and a valve element (6V) moveable by the electric actuator (13) to control the flow of exhaust gas through the exhaust gas recirculation passage (4a, 4b, 4c) and an electronic controller (20) to control opening and closing movement of the valve element (6V) of the exhaust gas recirculation valve (6) during normal running of the engine (2) and to control the exhaust gas recirculation valve (6) to perform at least one valve cleaning operation in which the valve element (6V) is moved between open and closed positions to remove deposits from the valve element (6V) when the engine (2) is not running, **characterised in that** the electronic controller (20) is further operable to delay execution of the at least one valve cleaning operation following a shutdown of the engine (2) to allow cooling of the valve element (6V) to take place.

2. A system as claimed in claim 1 wherein the electronic controller (20) is operable to enter a sleep mode during the delay between the shutdown of the engine (2) and the start of the cleaning operation.

3. A system as claimed in claim 1 or in claim 2
wherein the electronic controller (20) has a timer to define the delay between the shutdown of the engine (2) and the start of the cleaning operation.

4. A system as claimed in claim 3 wherein the length of the delay is based upon a comparison of an output from the timer with a predefined time limit.

5. A system as claimed in claim 1 or in claim 2 wherein the exhaust gas recirculation system further comprises a temperature sensor (21) arranged to provide a measurement of temperature to the electronic controller (20) indicative of a temperature of the exhaust gas recirculation valve (6) and the length of the delay between the shutdown of the engine and the start of the cleaning operation is based upon a comparison of the measured temperature with a predefined temperature limit.

6. A system as claimed in claim 1 or in claim 2 wherein the electronic controller (20) includes a model of predicted relationship between temperature and time for the exhaust gas recirculation valve (6) and the length of the delay between the shutdown of the engine (2) and the start of the cleaning operation is based upon a comparison of the predicted temperature with a predefined temperature limit.

7. A system as claimed in claim 1 wherein there are two or more cleaning operations and the electronic controller (20) is operable to enter a sleep mode during a first delay between the shutdown of the engine (2) and commencement of a first one of the cleaning operations and is further operable to enter the sleep mode during respective delay periods between subsequent cleaning operations.

8. A motor vehicle having an engine (2), at least one battery (30), a human machine interface (10) to selectively start and shutdown the engine (2) **characterised in that** the engine (2) has an exhaust gas recirculation system as claimed in any of claims 1 to 7.

9. A motor vehicle as claimed in claim 8 wherein the cleaning of the exhaust gas recirculation valve (6) is only permitted if a state of charge of the battery (30) is above a predefined state of charge limit.

10. A method of cleaning an exhaust gas recirculation valve (6) comprising an electric actuator (13) mounted on a valve body (14) and a valve element (6V) moveable by the electric actuator (13) to clean the exhaust gas recirculation valve (6), **characterised in that** the method comprises delaying cleaning of the exhaust gas recirculation valve (6) after shutdown of an engine (2) to which the exhaust gas recirculation valve (6) is connected to allow cooling of the valve element(6V) to take place thereby reducing the likelihood that deposits will reform on the valve element (6V) after the cleaning operation has been completed.

11. A method as claimed in claim 10 wherein the method further comprises putting an electronic controller (20) used to control operation of the exhaust gas recirculation valve (6) into a sleep mode during the delay between the shutdown of the engine (2) and the start of the cleaning operation in order to reduce the consumption of electricity by the electronic controller (20).

12. A method as claimed in claim 10 or in claim 11 wherein the method further comprises using a comparison of an output from a timer with a predefined time limit to determine the length of the delay.

13. A method as claimed in claim 10 or in claim 11 wherein the length of the delay is based upon a comparison of a measured temperature of the exhaust gas recirculation valve (6) with a predefined temperature limit.

14. A method as claimed in claim 10 or in claim 11 wherein the length of the delay is based upon a comparison of a predicted temperature of the exhaust gas recirculation valve (6) with a predefined temperature limit.

15. A method as claimed in claim 10 wherein the method comprises using two or more cleaning operations to clean the valve element (6V) and an electronic controller (20) used to control the exhaust gas recirculation valve (6) is put in a sleep mode during the delay between the shutdown of the engine and the start of a first one of the cleaning operations and the electronic controller (20) is further put into the sleep mode during respective delay periods between subsequent cleaning operations.
